# EUROPEAN PATENT SPECIFICATION

(11) **EP 4 078 087 B1**
(45) Date of publication and mention of the grant of the patent: **01.05.2024**
(21) Application number: 20734743.6
(22) Date of filing: 26.06.2020
(51) Int. Cl.: G01C 21/00

(54) **METHOD AND MOBILE ENTITY FOR DETECTING FEATURE POINTS IN AN IMAGE**
VERFAHREN UND MOBILE EINHEIT ZUR ERKENNUNG VON MERKMALSPUNKTEN AUF EINEM BILD
PROCÉDÉ ET ENTITÉ MOBILE POUR DÉTECTER DES POINTS CARACTÉRISTIQUES DANS UNE IMAGE

(30) Priority: 08.07.2019 DE 102019209990
(43) Date of publication of application: 26.10.2022
(73) Proprietor: Continental Automotive GmbH, 30165 Hannover (DE)
(72) Inventor: GAO, Bingtao, Chengdu City, Sichuan Province 610041 (CN); THIEL, Christian, 83080 Oberaudorf (DE); BARNARD, Paul, St Michael/Somerset BA3 5JJ (GB)
(74) Representative: Loveless, Ian Mark
(86) International application number: PCT/EP2020/068024
(87) International publication number: WO 2021/004813

(56) References cited:
- EP-A2- 2 874 097
- HEBERT M ET AL: "Semantic perception for ground robotics", UNMANNED SYSTEMS TECHNOLOGY XIV, SPIE, 1000 20TH ST. BELLINGHAM WA 98225-6705 USA, vol. 8387, no. 1, 11 May 2012 (2012-05-11) , pages 1-12, XP060003648, DOI: 10.1117/12.918915 [retrieved on 2012-05-24]
- SEBASTIAN SCHNEIDER ET AL: "Fusing vision and LIDAR - Synchronization, correction and occlusion reasoning", INTELLIGENT VEHICLES SYMPOSIUM (IV), 2010 IEEE, IEEE, PISCATAWAY, NJ, USA, 21 June 2010 (2010-06-21), pages 388-393, XP031732240, ISBN: 978-1-4244-7866-8
- JIANG CANSEN ET AL: "Incomplete 3D motion trajectory segmentation and 2D-to-3D label transfer for dynamic scene analysis", 2017 IEEE/RSJ INTERNATIONAL CONFERENCE ON INTELLIGENT ROBOTS AND SYSTEMS (IROS), IEEE, 24 September 2017 (2017-09-24), pages 606-613, XP033265986, DOI: 10.1109/IROS.2017.8202214 [retrieved on 2017-12-13]
- BABAHAJIANI POURIA ET AL: "Semantic Parsing of Street Scene Images Using 3D LiDAR Point Cloud", 2013 IEEE INTERNATIONAL CONFERENCE ON COMPUTER VISION WORKSHOPS, IEEE, 2 December 2013 (2013-12-02), pages 714-721, XP032575643, DOI: 10.1109/ICCVW.2013.98 [retrieved on 2014-03-04]
- XINYU HUANG ET AL: "The ApolloScape Open Dataset for Autonomous Driving and its Application", ARXIV.ORG, CORNELL UNIVERSITY LIBRARY, 201 OLIN LIBRARY CORNELL UNIVERSITY ITHACA, NY 14853, 16 March 2018 (2018-03-16), XP081074775,

## Description

### Technical Field

The disclosure relates to a method for detecting feature points in an image through which a mobile entity is moving. The disclosure further relates to a mobile entity for detecting feature points in an image. Moreover, the disclosure relates to a system for generating optimized feature points of an image.

### Background

Advanced driver systems and autonomously driving cars require high precision maps of roads and other areas on which vehicles can drive. Determining a vehicle's position on a road with the high accuracy needed for self-driving cars cannot be achieved by conventional navigation systems, such as satellite navigation systems, for example GPS, Galileo or GLONASS, or other known position techniques such as triangulation and the like. However, in particular when a self-driving vehicle moves on a road with multiple lanes, it is desired to exactly determine the position of the vehicle on one of the lanes.

One known way to determine a vehicle's position with high precision involves one or more cameras capturing images of road markings and comparing unique features of road markings or objects along the road in the captured images with corresponding reference images obtained from a database, in which a reference image of the respective position of road markings or objects is provided. This way of determining a position provides sufficiently accurate results only when the database provides highly accurate position data with the images and when it is updated regularly or at suitable intervals.

Road markings may be captured and registered by special purpose vehicles that capture images of the roads while driving, or they may be extracted from aerial photographs or satellite images. The latter variant may be considered advantageous since a perpendicular view, or top-view image, shows little distortion of road markings and other features on substantially flat surfaces. However, aerial photographs and satellite images may not provide sufficient detail for generating highly accurate maps of road markings and other road features. Also, aerial photographs and satellite images are less suitable for providing details on objects and road features that are best viewed from a ground perspective.

Most systems for positioning that are used today, such as, for example, Simultaneous Localization And Mapping (SLAM) and other machine vision algorithms, generate and use feature points. Feature points can be salient points of salient regions in a two-dimensional image generated by 2D-sensor, for example a camera, or in a two-dimensional representation of an environment generated by a scanning sensor. Although the salient points or regions may carry some information about a third dimension, they are usually defined and used in two-dimensional representations, since machine-vision or robot-vision is typically implemented using cameras which provide two-dimensional information. A set of feature points can be used for determining a position within a certain range, for example along a stretch of a road.

Conventional feature point-based detection methods usually only focus on local corners or "blob-like" features in an image. Such blob-like features may be small distinctive features which differ in properties, such as brightness or color from surrounding regions. A blob may be a region of an image in which some properties are constant or approximately constant. The points in a blob may be considered to be similar to each other. However, in many scenarios these detected feature points are not suitable to be used as robust landmarks for localization purposes. Examples of such scenarios are feature points on an object far away from a mobile entity, for example clouds, or feature points on a non-static object, for example a moving car, or feature points on a non-permanent object, for example shadow of a tree, snow etc.. Furthermore, some sparse individual feature points do not belong to any meaningful objects.

It is desired to provide a method for detecting feature points in an image, wherein the feature points are in fact meaningful feature points that belong to a static individual object, and wherein most meaningless feature points can be filtered out. A further desire is to provide a mobile entity for detecting meaningful feature points belonging to a static individual object in an image, and a system for generating optimized feature points of the scene.

The article `Semantic perception for ground robotics' by Hebert et al. in UNMANNED SYSTEMS TECHNOLOGY XIV, SPIE discloses modeling the environment of a robot by describing static objects in the environment.

The article 'Fusion Vision and LIDAR - Synchronization, Correction and Occlusion Reasoning' by Schneider et al. in INTELLIGENT VEHICLES SYMPOSIUM, 2010 IEEE, PISCATAWAY, NJ, USA discloses perception of an unstructured environment with dynamic objects using cameras and LIDAR sensors based on sensor fusion.

### Summary

The present disclosure provides a method for detecting feature points according to claim 1, a mobile entity according to claim 9, and a system according to claim 10. Specific embodiments are subject of the dependent claims.

An embodiment of a method for detecting feature points in an image and an embodiment of a mobile system for detecting feature points in an image are specified in the independent claims.

In an embodiment, a method for detecting feature points in an image includes the following steps in the order below:
- generating at least one 3D point cloud,
- performing a semantic segmentation of the 3D point cloud to obtain a segmented 3D point cloud,
- projecting at least a portion of the 3D points of the segmented 3D point cloud to a 2D image,
- creating a grid of the 2D image, the grid including a plurality of cells, wherein each of the cells include a plurality of pixels,
- counting of the projected 3D points included in each of the cells, evaluating the 3D point cloud, and
- if the count of the projected 3D points of a cell exceeds a threshold value, detecting feature points within that cell.

A 3D point cloud is based on multiple images from a moving monocular camera, which may be a camera of a vehicle. Such a vehicle may be a car, a truck, a motorcycle or any other vehicle. The 3D point cloud may be a dense or a semi-dense point cloud. Such a point cloud has less or significantly less points than the number of pixels in the images. A typical number of points may be between 2000 and 1000 points when projected on an image for a semi-dense point cloud and between 10000 and 100000 points when projected on an image for a dense point cloud.

With semantic segmentation, 3D cloud points are grouped together related to objects or categories. The semantic segmentation of the 3D point cloud may be performed based on clusters. In this step the individual objects to which the clusters refer may be differentiated. Only those of the 3D points being associated to a static object are selected for further evaluation steps. This may be done by a deep learning network to recognize static objects.

In a further step, the selected 3D points of the segmented 3D point cloud are projected to a 2D image, for example, in an orientation parallel to a plane of a street or a plane defined by a sensor e.g. of the vehicle. The 2D image is evaluated by creating a grid of the 2D image, wherein the grid comprises a plurality of cells. Any of the cells may include a plurality of 3D points. The grid is evaluated by counting the total number of the projected 3D points in each individual cell of the grid. If the counted number of projected 3D points in a cell is above a threshold, then the whole cell is selected and is marked as an active cell. For any number of the active cells, the feature points are detected. This may be done by using conventional methods, e.g. standard methods of SLAM processing.

In a next step a respective point cloud may be linked with the detected feature points. According to a possible embodiment, an identifier may be assigned to the point cloud to be linked with the detected feature points.

The method for detecting feature points in an image allows to find meaningful feature points that belong to static individual objects. On the other hand, detected meaningless feature points may be filtered out so that only the relevant feature points may be used for further processing. The proposed feature point detection with the guidance of point clouds, i.e. the feature detection based on the evaluation of point clouds, can focus on those feature points belonging to macro objects which are robust to changes in light, viewing angle and season. Moreover, points that belong to objects being very far away or being very small can be filtered out, which allows to improve localization accuracy.

According to an embodiment, the mobile entity comprises an environmental sensor unit to scan an environmental scene of the mobile entity, a storage unit to store a generated 3D model of the environmental scene of the mobile entity, and a processor unit. The environmental sensor may be a camera, a LIDAR, a RADAR or any other suitable device. The processor unit may be configured to execute instructions which, when executed by the processor unit in cooperation with the storage unit, perform processing steps of the method for detecting feature points in an image.

The mobile entity may be configured as an autonomous driving vehicle.

A system for generating optimized feature points of an image is specified in a further claim.

According to an embodiment, the system comprises a mobile entity for detecting feature points in an image, as described above, and a remote server to be in communication with the mobile entity. The remote server comprises at least a processor unit and a storage unit for storing a plurality of sets of feature points of the scene received from a plurality of other mobile entities. The mobile entity comprises a communication system to transmit the detected feature points and the point cloud information of the 3D point cloud to the remote server. The processor unit of the remote server is embodied to merge the feature points received from the mobile entity and the feature points stored in the storage unit of the remote server from the other mobile entities to generate optimized feature points of the scene.

The proposed method and system may be used for the localization of vehicles. Furthermore, the method may be used in the field of autonomous vehicle navigation, and, in particular, in the field of autonomous vehicle localization. The system and method may be applied for crowd sourcing a database, in particular for aligning a crowd-sourced database, for merging a crowd-sourced database, for crowd sourcing database generation, and for optimization of a crowd-sourced database.

Additional features and advantages are set forth in the detailed description that follows. It is to be understood that both the foregoing general description and the following detailed description are merely exemplary, and are intended to provide an overview or framework for understanding the nature and character of the claims.

### Brief Description of the Drawings

The accompanying drawings are included to provide further understanding, and are incorporated in, and constitute a part of, the specification. As such, the disclosure will be more fully understood from the following detailed description, taken in conjunction with the accompanying figures in which:
Figure 1 illustrates an exemplary simplified flowchart of a method for detecting feature points in an image; and
Figure 2 shows an exemplary simplified block diagram of a mobile entity for detecting feature points in an image, and a system for generating optimized feature points of the scene.
Figure 3 shows a semi-dense 3D point cloud.

### Detailed Description

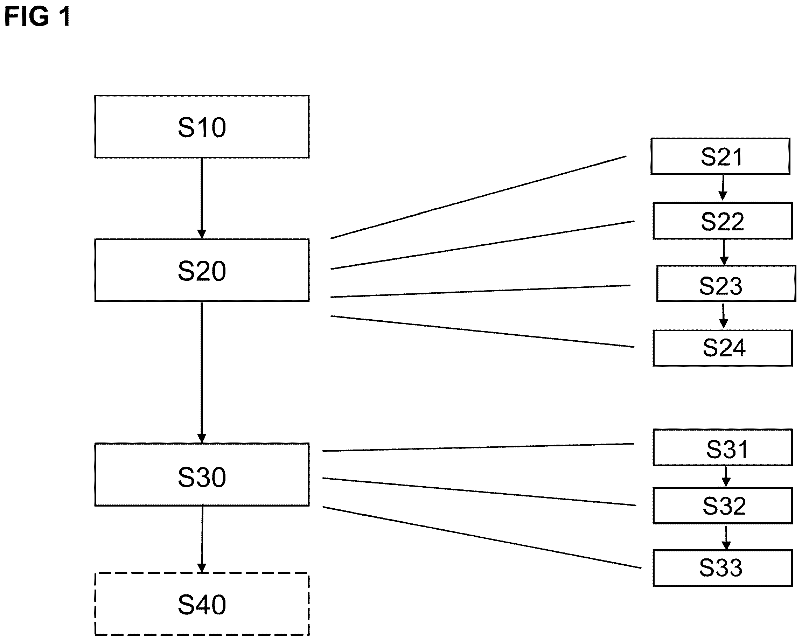

A method for detecting feature points in an image which allows to find meaningful feature points belonging to static objects and, furthermore, to filter out a large number of meaningless feature points is explained in the following with reference to Figure 1 illustrating different steps of the method. The method may be executed by or within a vehicle, e.g. a car.

In a first step S10 a 3D model of a scene may be generated from a mobile entity, for example a vehicle, which is moving through the scene. In particular, the 3D model is construed as a 3D point cloud. The 3D point cloud may be embodied as a semi-dense or dense point cloud. The semi-dense or dense point cloud may be generated by conventional methods, for example VO (Visual Odometry) or a SLAM (Simultaneously Localization and Mapping) techniques in the mobile entity. For this purpose, the mobile entity may comprise an environmental sensor unit which collects information about the environment of a path along which the mobile entity is moving or about the environment in which the mobile entity is located. In particular, the mobile entity is configured to generate the 3D point cloud by evaluating a plurality of 2D images which may be captured by a camera of the sensor unit or by evaluating data from other sensors of the vehicle.

In a subsequent step S20 the 3D point cloud is evaluated. The possible evaluation steps are described below in detail. In a subsequent step S30 feature points are detected in the scene based on the evaluation of the 3D point cloud. In an optional step S40 the detected feature points may be reported to a server for further processing.

The following embodiments describe how to evaluate the 3D point cloud for detecting the feature points. In a sub-step S21 of step S20, a segmentation which may be a semantic segmentation and/or a segmentation by a neural network is performed of the 3D point cloud to obtain a segmented 3D point cloud including a plurality of 3D points. The semantic segmentation may be based on clusters which allow to differentiate individual objects that the clusters may be referring to. An embodiment of the semantic segmentation, the 3D point cloud, for example the semi-dense/dense point cloud may be evaluating by a deep learning network to recognize static objects. As a result, it may be detected that a cluster of 3D points represents a static object in the scene.

In a sub-step S22 of step S20, at least a portion of the 3D points of the segmented 3D point cloud is projected to at least one of the plurality of the 2D images. The portion of the 3D points to be projected to the 2D image may be selected such that the selected 3D points are associated to a static object in the scene. This step allows to filter out meaningless feature points from further processing.

According to a sub step S23 of step S20, after having projected the portion of the 3D points to the 2D image, a grid of the 2D image is created. The grid includes a plurality of cells, wherein each of the cells includes a plurality of pixels. Each cell in the grid may be of size N x N pixels or N x M pixels, where N and M are positive integers. The feature points may be detected in the 2D image.

According to a subsequent sub-step S24 of step S20, the number of the projected 3D points included in each of the cells of the grid of the 2D image is counted. In the step S24, it may be evaluated how many of the evaluated 3D points are in a cell of the grid. One of the cells to be included in the portion of the cells for detecting the feature points is selected, if the count of projected 3D points of the respective cell is above a threshold value. If it is detected that the 3D points included within one of the cells of the grid has a predefined density or a predefined count, the respective cell may be marked as an active cell. As a result, at the positions of the active marked cells of the grid, a high quality for generating feature points is to be expected which allows to generate meaningful feature points in the area of the marked cells. That means that there is a high probability that static objects are present in the area of the marked cells of the grid of the 2D image.

In the following embodiments for detecting the feature points in the projected 2D image based on the evaluation of the point cloud according to step S30 are explained. According to a sub-step S31 of step S30, the feature points are detected for the portion of the cells being selected in step S24, i.e. for the cells marked as active. The feature points may be generated at the positions of the selected/actively marked cells of the 2D image. The feature points may be salient points in the 2D image which may be characterized by feature point descriptors. The feature point descriptors may be mathematical descriptions of the characteristics of a region in the 2D image, i.e. in the selected cell/the selected set of pixels. Feature point descriptors may be largely agnostic to distance and viewing angle/camera pose. They may include information about the rotational and translational behaviour of an image region that includes the feature point.

In a sub-step S32 of step S30, the 3D point cloud may be linked with the feature points detected in the 2D image. According to a possible embodiment of a sub-step S33 of step S30, an identifier (ID) may be assigned for the 3D point cloud to be linked with the detected feature points.

In an optional step S40, the detected feature points along with the point cloud information of the 3D point cloud may be reported to a server for further processing.

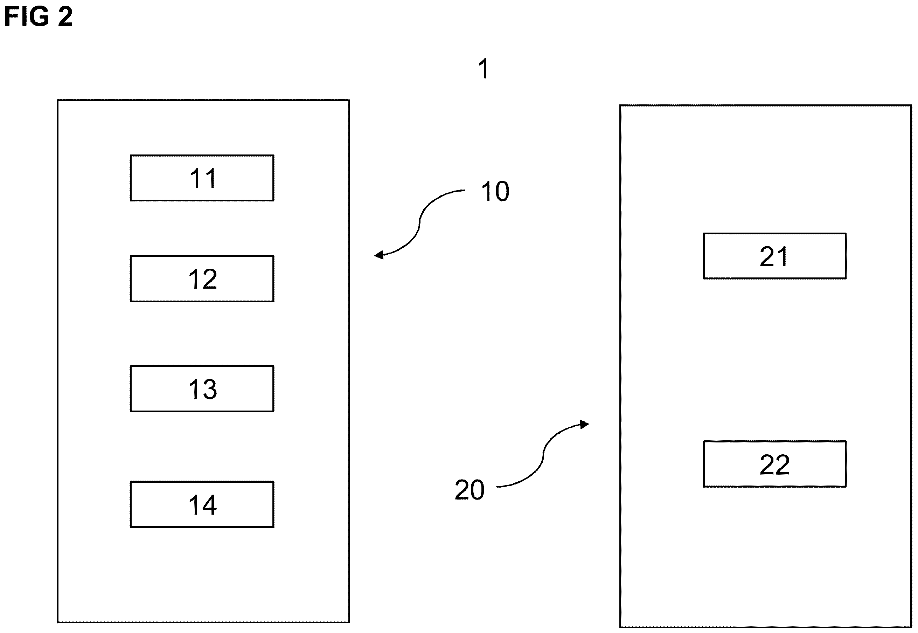

Figure 2 illustrates a system 1 for generating optimized feature points of a scene in which a mobile entity is located. The system 1 includes a mobile entity 10 for detecting feature points in the scene. The mobile entity 10 includes an environmental sensor unit 11 to scan an environmental scene of the mobile entity 10. The environmental sensor unit 11 may further include a camera system like a CCD camera which may be suitable for capturing 2D visible and/or infrared images. Further sensors like a radar sensor, a laser sensor, an RF channel sensor or an infrared sensor may be used for scanning the environment of the mobile entity to generate the 3D point cloud.

The mobile entity further may include a storage unit 12 to store at least one of the generated 2D images and/or the generated 3D model of the environmental scene, and it may include a processor unit 13. The processor unit 13 may be configured to execute instructions which, when executed by the processor unit 13 in cooperation with the storage unit 12, perform the various processing steps of the method for detecting the feature points in the scene as described above.

The system 1 for generating optimized feature points of the scene further may include a remote server 20 to be in communication with the mobile entity 10. The remote server 20 may include a processor unit 21 and a storage unit 22 for storing a plurality of sets of feature points of the scene received from a plurality of other mobile entities which are, or have been, located in the same scene as the mobile entity 10.

The mobile entity 10 may report the detected feature points along with the point cloud information of the 3D point cloud to the remote server 20. The processor unit 21 of the remote server may be configured to merge the feature points received from the mobile entity 10 along with the point cloud information of the 3D point cloud and the feature points along with their respective point cloud information of the 3D point cloud stored in the storage unit 21 from the other mobile entities to generate the optimized feature points of the scene.

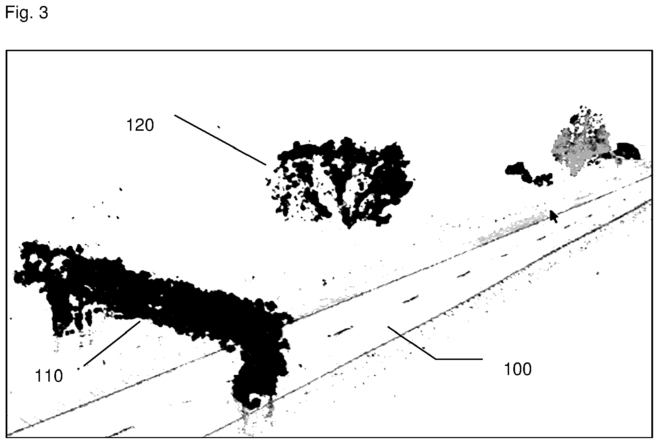

In figure 3, an image including multiple semi-dense 3D point clouds is shown. A first set of point clouds is formed by the features of a road 100, like the borders and the dashed center line. A further point cloud 110 is formed by a sign bridge 110. Another point cloud is based on a tree 120.

## Claims

1. A method for detecting feature points associated to static objects in an image, the method comprising:
- generating (S10) at least one 3D point cloud based on a plurality of 2D images from a moving monocular camera,
- performing (S21) a semantic segmentation of the 3D point cloud to obtain a segmented 3D point cloud,
- selecting 3D points of the segmented 3D point cloud that are associated to static objects,
- projecting (S22) the selected 3D points to at least one of the plurality of 2D images,
- detecting feature points within the 2D image which includes projected 3D points,
**characterised in that** the step of detecting the feature points within the 2D image includes:
- creating (S23) a grid of the 2D image which includes projected 3D points, the grid including a plurality of cells, wherein each of the cells include a plurality of pixels,
- counting (S24) the projected 3D points included in each of the cells, evaluating the 3D point cloud, and
- for any number of cells, where the count of the projected 3D points of the cell exceeds a threshold value, detecting (S31) feature points within that cell.

2. The method of claim 1, wherein the segmentation is based on clusters.

3. The method of any of the previous claims, further comprising:
linking (S32) the 3D point cloud with the detected feature points after detecting the feature points.

4. The method of claim 3, further comprising:
assigning (S33) an identifier for the 3D point cloud to be linked with the detected feature points.

5. The method of claims 3 or 4, further comprising:
reporting (S40) the detected feature points along with point cloud information of the 3D point cloud to a remote server (20) for further processing.

6. The method of any of the previous claims,
wherein the 3D point cloud is embodied as a semi-dense or dense point cloud.

7. The method of any of the previous claims,
wherein generating the at least one 3D point cloud includes using Visual Odometry, VO, or Simultaneous Localization and Mapping, SLAM.

8. The method of any of the previous claims,
wherein the moving camera is a camera of a vehicle.

9. A mobile entity (10) for detecting feature points associated to static objects in an image, comprising:
- at least one environmental sensor unit (11) configured to scan an environmental scene of the mobile entity (10) and to generate the plurality of 2D images,
- a storage unit (12) configured to store a generated 3D model of the environmental scene of the mobile entity (10) and/or at least one of the 2D images, and
- a processor unit (13) to execute instructions which when executed by the processor unit (13) in cooperation with the storage unit (12) cause the processor unit to perform the method according to any of the claims 1 to 8.

10. A system (1) for generating optimized feature points of an image, comprising:
- the mobile entity (10) of claim 9,
- a remote server (20) configured to be in communication with the mobile entity (10), the remote server (20) comprising a processor unit (21) and a storage unit (22) for storing a plurality of sets of feature points of the scene received from a plurality of other mobile entities,
- wherein the mobile entity (10) comprises a communication system (14) to transmit the detected feature points along with point cloud information of the 3D point cloud to the remote server (20), and
- wherein the processor unit (21) is configured to merge the feature points along with the point cloud information of the 3D point cloud received from the mobile entity (10) and the feature points along with point cloud information of the 3D point cloud of the other mobile entities stored in the storage unit (21) to generate the optimized feature points of the scene.

## Patentansprüche

1. Verfahren zum Erkennen von mit statischen Objekten in einem Bild assoziierten Merkmalspunkten, wobei das Verfahren Folgendes beinhaltet:
- Erzeugen (S10) mindestens einer 3D-Punktwolke auf der Basis von mehreren 2D-Bildern von einer sich bewegenden monokularen Kamera,
- Durchführen (S21) einer semantischen Segmentierung der 3D-Punktwolke, um eine segmentierte 3D-Punktwolke zu erhalten,
- Auswählen von mit statischen Objekten assoziierten 3D-Punkten der segmentierten 3D-Punktwolke,
- Projizieren (S22) der ausgewählten 3D-Punkte auf mindestens eines der mehreren 2D-Bilder,
- Erkennen von Merkmalspunkten innerhalb des 2D-Bildes, das projizierte 3D-Punkte enthält,
**dadurch gekennzeichnet, dass** der Schritt des Erkennens der Merkmalspunkte innerhalb des 2D-Bildes Folgendes beinhaltet:
- Erzeugen (S23) eines Gitters des 2D-Bildes, das projizierte 3D-Punkte enthält, wobei das Gitter mehrere Zellen enthält, wobei jede der Zellen mehrere Pixel enthält,
- Zählen (S24) der in jeder der Zellen enthaltenen projizierten 3D-Punkte, Auswerten der 3D-Punktwolke, und
- Erkennen (S31) für eine Anzahl von Zellen, bei denen die Anzahl der projizierten 3D-Punkte der Zelle einen Schwellenwert überschreitet, von Merkmalspunkten innerhalb dieser Zelle.

2. Verfahren nach Anspruch 1, wobei die Segmentierung auf Clustern basiert.

3. Verfahren nach einem der vorherigen Ansprüche, das ferner Folgendes beinhaltet:
Verknüpfen (S32) der 3D-Punktwolke mit den erkannten Merkmalspunkten nach dem Erkennen der Merkmalspunkte.

4. Verfahren nach Anspruch 3, das ferner Folgendes beinhaltet:
Zuweisen (S33) einer Kennung für die mit den erkannten Merkmalspunkten zu verknüpfende 3D-Punktwolke.

5. Verfahren nach Anspruch 3 oder 4, das ferner Folgendes beinhaltet:
Melden (S40) der erkannten Merkmalspunkte samt Punktwolkeninformationen der 3D-Punktwolke an einen entfernten Server (20) zur weiteren Verarbeitung.

6. Verfahren nach einem der vorherigen Ansprüche,
wobei die 3D-Punktwolke als halbdichte oder dichte Punktwolke ausgeführt ist.

7. Verfahren nach einem der vorherigen Ansprüche,
wobei das Erzeugen der mindestens einen 3D-Punktwolke das Verwendung von VO (Visual Odometry) oder SLAM (Simultaneous Localization and Mapping) beinhaltet.

8. Verfahren nach einem der vorherigen Ansprüche,
wobei die bewegliche Kamera eine Kamera eines Fahrzeugs ist.

9. Mobile Entität (10) zum Erkennen von mit statischen Objekten in einem Bild assoziierten Merkmalspunkten, die Folgendes umfasst:
- mindestens eine Umgebungssensoreinheit (11), die zum Abtasten einer Umgebungsszene der mobilen Entität (10) und zum Erzeugen der mehreren 2D-Bilder konfiguriert ist,
- eine Speichereinheit (12), die zum Speichern eines erzeugten 3D-Modells der Umgebungsszene der mobilen Entität (10) und/oder mindestens eines der 2D-Bilder konfiguriert ist, und
- eine Prozessoreinheit (13) zum Ausführen von Befehlen, die bei Ausführung durch die Prozessoreinheit (13) in Zusammenarbeit mit der Speichereinheit (12) die Prozessoreinheit zum Durchführen des Verfahrens nach einem der Ansprüche 1 bis 8 veranlassen.

10. System (1) zum Erzeugen optimierter Merkmalspunkte eines Bildes, das Folgendes umfasst:
- die mobile Entität (10) nach Anspruch 9,
- einen entfernten Server (20), der so konfiguriert ist, dass er mit der mobilen Entität (10) in Verbindung steht, wobei der entfernte Server (20) eine Prozessoreinheit (21) und eine Speichereinheit (22) zum Speichern mehrerer von mehreren anderen mobilen Entitäten empfangener Sätze von Merkmalspunkten der Szene umfasst,
- wobei die mobile Einheit (10) ein Kommunikationssystem (14) zum Übertragen der erkannten Merkmalspunkte samt Punktwolkeninformationen der 3D-Punktwolke zu dem entfernten Server (20) umfasst, und
- wobei die Prozessoreinheit (21) zum Zusammenführen der Merkmalspunkte samt den von der mobilen Entität (10) empfangenen Punktwolkeninformationen der 3D-Punktwolke und der Merkmalspunkte samt in der Speichereinheit (21) gespeicherter Punktwolkeninformationen der 3D-Punktwolke der anderen mobilen Einheiten konfiguriert ist, um die optimierten Merkmalspunkte der Szene zu erzeugen.

## Revendications

1. Procédé de détection de points caractéristiques associés à des objets statiques dans une image, le procédé comprenant :
- la génération (S10) d'au moins un nuage de points 3D à partir d'une pluralité d'images 2D en provenance d'une caméra monoculaire mobile,
- la réalisation (S21) d'une segmentation sémantique du nuage de points 3D pour obtenir un nuage de points 3D segmenté,
- la sélection de points 3D du nuage de points 3D segmenté qui sont associés à des objets statiques,
- la projection (S22) des points 3D sélectionnés sur au moins une de la pluralité d'images 2D,
- la détection de points caractéristiques dans l'image 2D qui comporte des points 3D projetés, **caractérisé en ce que** l'étape de détection des points caractéristiques dans l'image 2D comporte :
- la création (S23) d'une grille de l'image 2D qui comporte des points 3D projetés, la grille comportant une pluralité de cellules, dans lequel chacune des cellules comporte une pluralité de pixels,
- le comptage (S24) des points 3D projetés inclus dans chacune des cellules, l'évaluation du nuage de points 3D, et
- pour n'importe quel nombre de cellules, lorsque le compte des points 3D projetés de la cellule dépasse une valeur de seuil, la détection (S31) de points caractéristiques à l'intérieur de cette cellule.

2. Procédé selon la revendication 1, dans lequel la segmentation est basée sur des grappes.

3. Procédé selon l'une ou l'autre des revendications précédentes, comprenant en outre :
la liaison (S32) du nuage de points 3D avec les points caractéristiques détectés après la détection des points caractéristiques.

4. Procédé selon la revendication 3, comprenant en outre :
l'attribution (S33) d'un identifiant au nuage de points 3D à lier aux points caractéristiques détectés.

5. Procédé selon les revendications 3 ou 4, comprenant en outre :
la signalisation (S40) des points caractéristiques détectés ainsi que d'informations de nuage de points du nuage de points 3D à un serveur distant (20) en vue de leur traitement ultérieur.

6. Procédé selon l'une des revendications précédentes,
dans lequel le nuage de points 3D est incorporé sous la forme d'un nuage de points semi-dense ou dense.

7. Procédé selon l'une des revendications précédentes,
dans lequel la génération de l'au moins un nuage de points 3D comporte l'utilisation de l'odométrie visuelle, VO, ou de la localisation et du mappage simultanée, SLAM.

8. Procédé selon l'une des revendications précédentes,
dans lequel la caméra mobile est une caméra d'un véhicule.

9. Entité mobile (10) de détection de points caractéristiques associés à des objets statiques dans une image, comprenant :
- au moins une unité de capteur environnemental (11) configurée pour balayer une scène environnementale de l'entité mobile (10) et générer la pluralité d'images 2D,
- une unité de stockage (12) configurée pour stocker un modèle 3D généré de la scène environnementale de l'entité mobile (10) et/ou au moins une des images 2D, et
- une unité de traitement (13) pour exécuter des instructions qui, à leur exécution par l'unité de traitement (13) en coopération avec l'unité de stockage (12), amènent l'unité de traitement à réaliser le procédé selon l'une quelconque des revendications 1 à 8.

10. Système (1) permettant de générer des points caractéristiques optimisés d'une image, comprenant :
- l'entité mobile (10) selon la revendication 9,
- un serveur distant (20) configuré pour être en communication avec l'entité mobile (10), le serveur distant (20) comprenant une unité de processeur (21) et une unité de stockage (22) pour stocker une pluralité d'ensembles de points caractéristiques de la scène reçus à partir d'une pluralité d'autres entités mobiles,
- dans lequel l'entité mobile (10) comprend un système de communication (14) pour transmettre les points caractéristiques détectés ainsi que des informations de nuage de points du nuage de points 3D au serveur distant (20), et
- dans lequel l'unité de processeur (21) est configurée pour fusionner les points caractéristiques ainsi que les informations de nuage de points du nuage de points 3D reçues à partir de l'entité mobile (10) et les points caractéristiques ainsi que les informations de nuage de points du nuage de points 3D des autres entités mobiles stockés dans l'unité de stockage (21) afin de générer les points caractéristiques optimisés de la scène.
